# EUROPÄISCHE PATENTSCHRIFT

(11) **EP 1 899 204 B1**
(45) Veröffentlichungstag und Bekanntmachung des Hinweises auf die Patenterteilung: **26.11.2008**
(21) Anmeldenummer: 06755201.8
(22) Anmeldetag: 16.05.2006
(51) Int. Cl.: B60T 13/02

(54) **HALTEBREMSVORRICHTUNG**
HOLDING BRAKE DEVICE
DISPOSITIF A FREIN D'ARRET

(30) Priorität: 07.07.2005 DE 102005031896
(43) Veröffentlichungstag der Anmeldung: 19.03.2008
(73) Patentinhaber: Continental Automotive GmbH, 30165 Hannover (DE)
(72) Erfinder: MOLFETTA, Damiano, 8623 Wetzikon (CH)
(86) Internationale Anmeldenummer: PCT/EP2006/062326
(87) Internationale Veröffentlichungsnummer: WO 2007/006597

(56) Entgegenhaltungen:
- EP-A- 1 621 436
- WO-A-03/091591

## Beschreibung

Die Erfindung betrifft eine Haltebremsvorrichtung, insbesondere für eine elektrisch stellbare Bremse, z.B. eine Feststellbremsanlage oder Parkbremse eines Fahrzeugs.

Eine elektrisch stellbare Bremse eines Fahrzeugs weist einen elektromotorischen Stellantrieb auf zum Erzeugen einer Bremskraft, die Bremsen zugeführt wird, die den Rädern des Fahrzeugs zugeordnet sind. Die Bremskraft an den Bremsen soll auch nach Abschalten des elektromotorischen Stellantriebs aufrecht erhalten bleiben, um beispielsweise ein Wegrollen des Fahrzeugs verhindern zu können. Die Regelungen 13 und 13H der UN Economic Commission, kurz: ECE, verlangen, dass die Bremswirkung an den Rädern des Fahrzeugs durch eine ausschließlich mechanische Vorrichtung aufrecht erhalten bleibt.

WO 03/091591 A1 beschreibt eine gattungsbildende Parkbremse.

Die US 6 662 676 B2 offenbart ein sich selbst justierendes Parkbremssystem, das automatisch ein loses Bremsseil strafft. Das Parkbremssystem umfasst einen Verriegelungsmechanismus, der eine Sperrklinke mit einer Vielzahl von Zähnen und einen Sperrzahn aufweist, der in die Zähne der Sperrklinke eingreift. Das System umfasst einen handbedienbaren Hebel, der in Positionen zum Anziehen oder Lösen der Bremsen bewegt werden kann. Die jeweils eingestellte Position wird durch den Verriegelungsmechanismus gehalten. Ein Selbstjustierungsmechanismus verbindet das Bremsseil mit dem Hebel.

Die US 6 213 259 B1 offenbart eine Vorrichtung, eine Methode und ein System für das Steuern einer elektrisch betriebenen Parkbremse. Die Parkbremse umfasst ein elektronisches Steuerungsmodul zum Ermitteln eines Betrags einer mechanischen Spannung in einem Bremsseil als Funktion eines elektrischen Stroms, der zum Betreiben eines elektrischen Motors zum Verstellen der Bremse erforderlich ist. Ferner ist vorgesehen, eine zurückgelegte Wegstrecke des Bremsseils beim Lösen der Bremse zu erfassen. Der elektrische Motor treibt eine Spindelschraube an. Dadurch wird eine zugehörige Spindel axial bewegt. Spindel und Spindelschraube sind dabei so schwergängig gegeneinander bewegbar, dass diese Bewegung nicht durch die über das Bremsseil auf die Spindel ausgeübte Kraft erfolgen kann.

Die Aufgabe der Erfindung ist, eine Haltebremsvorrichtung zu schaffen, die zuverlässig ist und die einfach stellbar ist.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich aus durch eine Haltebremsvorrichtung, die einen Bremskörper, einen Abtriebskörper und eine Bremsfläche umfasst. Der Abtriebskörper ist axial bewegbar angeordnet. Der Abtriebskörper ist mit einer Abtriebseinheit koppelbar, durch die eine axiale Abtriebskraft in einer vorgegebenen Richtung auf den Abtriebskörper ausübbar ist. Der Abtriebskörper weist ein Führungselement auf. Der Bremskörper weist eine Führung auf, in der das Führungselement des Abtriebskörpers geführt ist. Der Bremskörper und die Führung sind so ausgebildet, dass der Bremskörper abhängig von einer aktuellen Position des Bremskörpers in Bezug auf das Führungselement des Abtriebskörpers zwischen dem Führungselement und der Bremsfläche verklemmt ist oder die Verklemmung des Bremskörpers zwischen dem Führungselement und der Bremsfläche aufgehoben ist.

Der Vorteil ist, dass durch das Verklemmen des Bremskörpers zwischen dem Führungselement und der Bremsfläche der axialen Abtriebskraft zuverlässig entgegengewirkt und der Abtriebskörper zuverlässig in seiner aktuellen Position gehalten werden kann. Ferner ist durch das Aufheben der Verklemmung ein einfaches axiales Verstellen oder Positionieren des Abtriebskörpers mit einem hohen Wirkungsgrad möglich.

In einer vorteilhaften Ausgestaltung der Haltebremsvorrichtung ist die Führung des Bremskörpers so ausgebildet, dass der Bremskörper einen Keil bildet, der in dem Haltezustand der Haltebremsvorrichtung selbsthemmend zwischen dem Führungselement des Abtriebskörpers und der Bremsfläche verklemmt ist. Ein solcher Keil als Bremskörper hat den Vorteil, dass durch die Selbsthemmung das Verklemmen des Bremskörpers mit der axialen Abtriebskraft zunehmen kann. Dadurch ist sichergestellt, dass der Abtriebskörper zuverlässig in seiner aktuellen Position gehalten werden kann.

In einer weiteren vorteilhaften Ausgestaltung der Haltebremsvorrichtung ist die Führung des Bremskörpers als ein Langloch in dem Bremskörper ausgebildet. Dies hat den Vorteil, dass die Führung so besonders einfach herstellbar ist.

In diesem Zusammenhang ist es vorteilhaft, wenn das Führungselement des Abtriebskörpers stiftförmig ausgebildet ist und in das Langloch in dem Bremskörper eingebracht ist. Der Vorteil ist, dass dies sehr einfach ist.

In einer weiteren vorteilhaften Ausgestaltung der Haltebremsvorrichtung umfasst die Haltebremsvorrichtung einen Stellkörper. Der Stellkörper ist axial bewegbar angeordnet. Der Stellkörper ist ferner mit einer Antriebseinheit koppelbar. Der Stellkörper ist abhängig von einer Ansteuerung der Antriebseinheit axial bewegbar. Der Stellkörper und der Abtriebskörper sind in einer ersten und in einer zweiten Stellposition des Stellkörpers in Bezug auf den Abtriebskörper miteinander koppelbar abhängig von einer axialen Position des Stellkörpers in Bezug auf den Abtriebskörper zum Aufheben der Verklemmung des Bremskörpers zwischen dem Führungselement und der Bremsfläche. Der Vorteil ist, dass der Abtriebskörper so mittels des Stellkörpers axial bewegbar ist und dass ferner das axiale Bewegen des Abtriebskörpers sehr einfach und mit hohem Wirkungsgrad möglich ist, da durch den Stellkörper das Verklemmen des Bremskörpers aufgehoben ist. Dies hat ferner den Vorteil, dass die Antriebseinheit einfach, klein und preisgünstig ausgebildet sein kann, da das axiale Verstellen oder Positionieren des Stellkörpers oder des Abtriebskörpers nach dem Aufheben der Verklemmung des Bremskörpers mit geringem Kraft- und Energieaufwand möglich ist.

In diesem Zusammenhang ist es vorteilhaft, wenn das Verklemmen des Bremskörpers aufgehoben ist, wenn der Stellkörper durch axiales Positionieren in der ersten Stellposition in Bezug auf den Abtriebskörper angeordnet ist zum Bewegen des Abtriebskörpers mittels des Stellkörpers entgegen der vorgegebenen Richtung der axialen Abtriebskraft. Dies hat den Vorteil, dass dadurch z.B. die axiale Abtriebskraft mit hohem Wirkungsgrad vergrößert werden kann, z.B. um eine Bremswirkung an Rädern eines Fahrzeugs zu vergrößern. Zum axialen Verstellen oder Positionieren des Abtriebskörpers durch die Antriebseinheit muss diese nur wenig mehr als die axiale Abtriebskraft aufbringen.

In diesem Zusammenhang ist es weiter vorteilhaft, wenn das Verklemmen des Bremskörpers aufgehoben ist durch axiales Positionieren des Stellkörpers in der zweiten Stellposition in Bezug auf den Abtriebskörper, so dass eine Normalkraft, die der Bremskörper während des Verklemmens auf die Bremsfläche ausübt, durch eine Schwenkbewegung des Bremskörpers um das Führungselement des Abtriebskörpers so verringert ist, dass das Abtriebselement axial verschiebbar ist. Dies hat den Vorteil, dass dadurch auch das axiale Verstellen oder Positionieren des Abtriebskörpers in der vorgegebenen Richtung der axialen Abtriebskraft sehr einfach und mit hohem Wirkungsgrad möglich ist, z.B. um die axiale Abtriebskraft zu verringern. So kann z.B. die Bremswirkung an Rädern des Fahrzeugs verringert werden.

In diesem Zusammenhang ist es weiter vorteilhaft, wenn der Bremskörper als ein Hebel ausgebildet ist, der mittels des Stellkörpers betätigbar ist zum Ausführen der Schwenkbewegung des Bremskörpers um das Führungselement des Abtriebskörpers. Dies hat den Vorteil, dass die Schwenkbewegung durch den Hebel sehr einfach ausführbar ist.

In einer weiteren vorteilhaften Ausgestaltung der Haltebremsvorrichtung ist der Bremskörper durch ein Federelement mit dem Abtriebskörper gekoppelt. Das Federelement drückt den Bremskörper gegen die Bremsfläche. Der Vorteil ist, dass dadurch der Bremskörper auch bei dem axialen Verstellen oder Positionieren des Abtriebskörpers in Kontakt mit der Bremsfläche gehalten werden kann. Dies ermöglicht, den Haltezustand der Haltebremsvorrichtung schnell und zuverlässig einzunehmen, wenn das axiale Verstellen oder Positionieren beendet ist. Die aktuelle axiale Position des Abtriebskörpers kann so zuverlässig gehalten werden.

In einer weiteren vorteilhaften Ausgestaltung der Haltebremsvorrichtung ist in dem Abtriebskörper eine axiale Ausnehmung ausgebildet. Der Stellkörper erstreckt sich durch die axiale Ausnehmung. Der Stellkörper ist in der ersten Stellposition in Bezug auf den Abtriebskörper so mit dem Abtriebskörper gekoppelt, dass dieser entgegen der vorgegebenen Richtung verschiebbar ist. Ferner ist der Stellkörper in der zweiten Stellposition in Bezug auf den Abtriebskörper so mit dem Abtriebskörper gekoppelt, dass dieser in der vorgegebenen Richtung verschiebbar ist. Dies hat den Vorteil, dass der Abtriebskörper so sehr einfach mittels des Stellkörpers in der vorgegebenen Richtung oder entgegen der vorgegebenen Richtung verschiebbar ist. Das Koppeln des Stellkörpers und des Abtriebskörpers kann so ausgelegt sein, dass große Kräfte von der Antriebseinheit auf die Abtriebseinheit verlustarm und mit hohem Wirkungsgrad übertragbar sind.

Ausführungsbeispiele der Erfindung sind im Folgenden anhand der schematischen Zeichnungen erläutert. Es zeigen:
Figur 1A eine erste Anordnung einer Aktorvorrichtung in einem Fahrzeug,
Figur 1B eine zweite Anordnung der Aktorvorrichtung in dem Fahrzeug,
Figur 2 die Aktorvorrichtung,
Figur 3 eine Haltebremsvorrichtung in ihrem Haltezustand, Figur 4 die Haltebremsvorrichtung mit einem Stellkörper in einer ersten Stellposition in Bezug auf einen Abtriebskörper und
Figur 5 die Haltebremsvorrichtung mit dem Stellkörper in einer zweiten Stellposition in Bezug auf den Abtriebskörper.

Elemente gleicher Konstruktion oder Funktion sind figurenübergreifend mit den gleichen Bezugszeichen versehen.

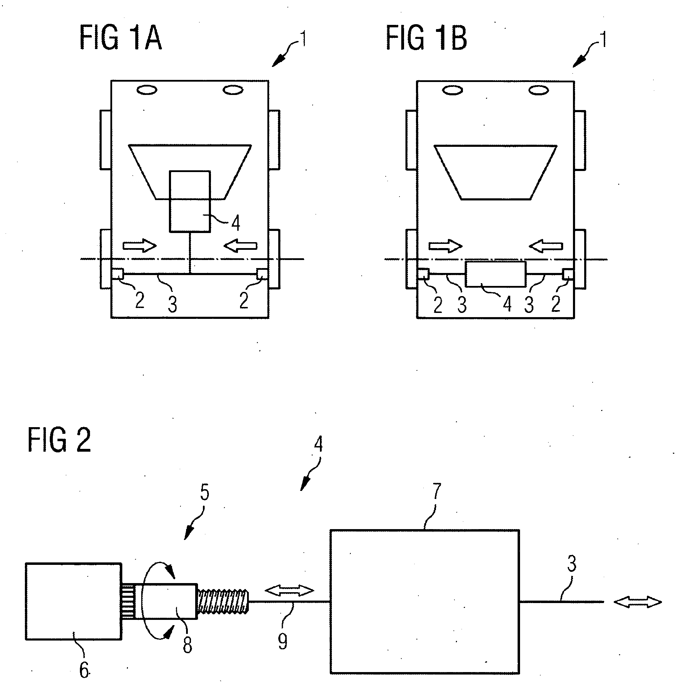

Figur 1A zeigt ein Fahrzeug 1, das an einer hinteren Fahrzeugradachse für ein Rad an der rechten Fahrzeugseite und für ein Rad an der linken Fahrzeugseite jeweils eine Bremse 2 aufweist. Die jeweilige Bremse 2 ist über ein Bremsseil 3 mit einer Aktorvorrichtung 4 gekoppelt. Gegebenenfalls ist eine geeignete Umlenkung für das Bremsseil 3 vorgesehen. Ferner kann ein Ausgleichselement an der Aktorvorrichtung 4 oder an dem Bremsseil 3 vorgesehen sein zum Ausgleichen einer Bremskraft der Bremse 2 an der rechten bzw. der linken Fahrzeugseite, so dass die Bremskraft jeweils etwa gleich groß ist. Die Aktorvorrichtung 4 ist beispielsweise ein Teil einer elektrisch stellbaren Bremse des Fahrzeugs 1, insbesondere einer Feststellbremse oder Parkbremse. Die Aktorvorrichtung 4 ist beispielsweise in einem Mittelkanal des Fahrzeugs 1 angeordnet, z.B. in einem Bereich einer Handbremse.

Alternativ kann die Aktorvorrichtung 4 jedoch auch in einem Bereich einer Fahrzeugradachse, beispielsweise der hinteren Fahrzeugradachse des Fahrzeugs 1, angeordnet sein (Figur 1B). Die Aktorvorrichtung 4 ist dazu bevorzugt an der Fahrzeugradachse des Fahrzeugs 1 montiert. Dies hat den Vorteil, dass eine solche Anordnung aus Fahrzeugradachse und Aktorvorrichtung 4 für eine Montage des Fahrzeugs 1 vormontiert werden kann. Dies kann die Montage des Fahrzeugs 1 vereinfachen. Die Aktorvorrichtung 4 kann jedoch ebenso z.B. an einem Chassis des Fahrzeugs 1 montiert sein. Die jeweilige Bremse 2 an der rechten bzw. der linken Fahrzeugseite ist gegebenenfalls durch geeignetes Umlenken des Bremsseils 3 und/oder durch das Ausgleichselement mit der Aktorvorrichtung 4 gekoppelt.

Das Bremsseil 3 soll durch die Aktorvorrichtung 4 eine vorgegebene Wegstrecke bewegt und/oder mit einer vorgegebenen Kraft gespannt werden können, um die jeweilige Bremse 2 zuverlässig betätigen zu können. Die Aktorvorrichtung 4 umfasst dazu eine Antriebseinheit 5, die wiederum einen elektromotorischen Stellantrieb 6 und eine Spindel 8 umfasst (Figur 2). Die Aktorvorrichtung 4 umfasst ferner eine Haltebremsvorrichtung 7, die über die Spindel 8 und ein Übertragungselement 9 mit dem elektromotorischen Stellantrieb 6 gekoppelt ist. Die Antriebseinheit 5 ist so ausgebildet, dass das Übertragungselement 9 abhängig von einer Ansteuerung des elektromotorischen Stellantriebs 6 eine axiale Bewegung ausführt.

Die Spindel 8 wird von dem elektromotorischen Stellantrieb 6 rotatorisch angetrieben. Eine Spindelschraube, die rotatorisch fixiert, jedoch axial bewegbar in der Spindel 8 angeordnet ist, führt abhängig von der rotatorischen Bewegung der Spindel 8 die axiale Bewegung aus, die über das Übertragungselement 9 der Haltebremsvorrichtung 7 eingangsseitig zugeführt wird. Ein Schraubengang der Spindel 8 und/oder der Spindelschraube kann konstant oder auch veränderlich sein. Ist der Schraubengang veränderlich, dann ist eine zurückgelegte axiale Wegstrecke des Übertragungselements 9 für jede Umdrehung der Spindel 8 abhängig von einer axialen Position der Spindelschraube in der Spindel 8. Dadurch kann die axiale Bewegung besonders gut dosierbar sein. Die Antriebseinheit 5 kann jedoch auch anders ausgebildet sein.

Ausgangsseitig ist die Haltebremsvorrichtung 7 mit dem Bremsseil 3 gekoppelt. Die Bremsen 2 können auch als eine Abtriebseinheit bezeichnet werden. Die Abtriebseinheit kann über das Bremsseil 3 ausgangsseitig der Haltebremsvorrichtung 7 eine axiale Abtriebskraft in einer vorgegebenen Richtung ausüben, z.B. in Richtung von der Haltebremsvorrichtung 7 hin zu der Abtriebseinheit. Die Bremskraft der Bremsen 2 ist bevorzugt abhängig von der axialen Abtriebskraft.

Durch die Haltebremsvorrichtung kann die axiale Bewegung des Übertragungselements 9 auf das Bremsseil 3 übertragen werden zum Anziehen oder zum Lösen der Bremsen 2 oder zum Erhöhen oder zum Verringern der axialen Abtriebskraft bzw. der Bremskraft der Bremsen 2. Die Haltebremsvorrichtung 7 ist ferner ausgebildet, eine aktuelle Position des Bremsseils 3 und/oder eine aktuelle axiale Abtriebskraft in dem Bremsseil 3 aufrecht zu erhalten. Insbesondere soll die aktuelle Position oder die aktuelle axiale Abtriebskraft auch dann aufrecht erhalten werden, wenn der elektromotorische Stellantrieb 6 nicht bestromt ist. Dadurch ist sichergestellt, dass auch bei einem Ausfall der elektrischen Versorgung des elektromotorischen Stellantriebs 6 die Bremskraft der Bremsen 2 erhalten bleibt.

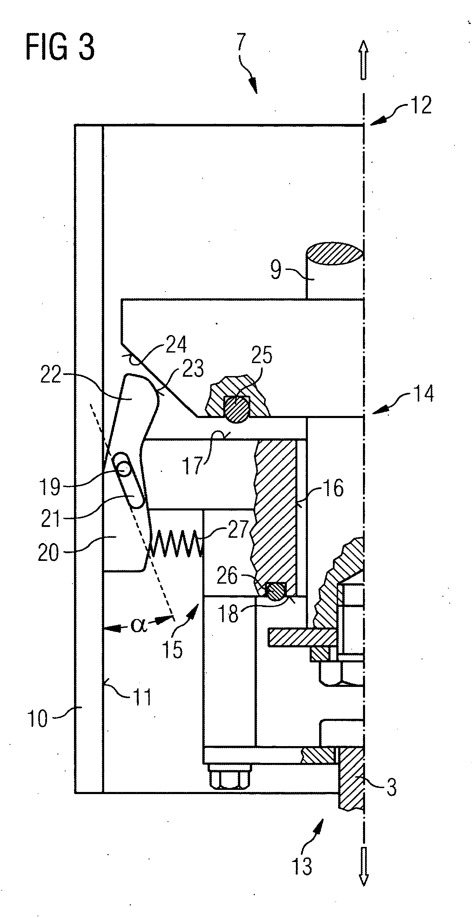

Die Figuren 3, 4 und 5 zeigen beispielhaft eine Ausführungsform der Haltebremsvorrichtung 7. Vorzugsweise ist die Haltebremsvorrichtung 7 symmetrisch ausgebildet. Die Haltebremsvorrichtung 7 umfasst ein Gehäuse 10, das in seinem Inneren eine Bremsfläche 11 aufweist. Die Haltebremsvorrichtung 7 weist einen Antriebsbereich 12 und einen Abtriebsbereich 13 auf. In dem Antriebsbereich 12 ist die Haltebremsvorrichtung 7 mittels des Übertragungselements 9 mit der Antriebseinheit 5 koppelbar. Das Übertragungselement 9 ist beispielsweise ein Seil oder ein Gestänge. Der Abtriebsbereich 13 ist über das Bremsseil 3 mit der Abtriebseinheit bzw. den Bremsen 2 koppelbar.

Die Haltebremsvorrichtung 7 weist einen Stellkörper 14 und einen Abtriebskörper 15 auf. Der Stellkörper 14 ist mit dem Übertragungselement 9 koppelbar. Der Abtriebskörper 15 ist entsprechend mit dem Bremsseil 3 koppelbar. Die axiale Abtriebskraft wird somit über das Bremsseil 3 auf den Abtriebskörper 15 übertragen. Der Abtriebskörper 15 weist eine Ausnehmung 16 auf. Ferner weist der Abtriebskörper 15 eine dem Antriebsbereich 12 der Haltebremsvorrichtung 7 zugewandte Fläche 17 und eine dem Abtriebsbereich 13 der Haltebremsvorrichtung 7 zugewandte Fläche 18 auf. Der Abtriebskörper 15 weist ferner ein Führungselement 19 auf, das bevorzugt stiftförmig ausgebildet ist.

Die Haltebremsvorrichtung 7 umfasst ferner einen Bremskörper 20, der eine Führung 21 aufweist. Der Bremskörper 20 umfasst einen Hebelarm 22, an dem eine Hebelfläche 23 ausgebildet ist. Der Stellkörper 14 weit eine der Hebelfläche 23 zugeordnete Stellfläche 24 auf.

Der Stellkörper 14 ist so ausgebildet, dass dieser sich durch die Ausnehmung 16 in dem Abtriebskörper 15 erstreckt. Der Stellkörper 14 kann an einer Fläche, die der dem Antriebsbereich 12 der Haltebremsvorrichtung 7 zugewandten Fläche 17 des Abtriebskörpers 15 zugewandt ist, ein erstes Dämpfungselement 25 aufweisen. Entsprechend kann in der dem Abtriebsbereich 13 der Haltebremsvorrichtung 7 zugewandten Fläche 18 des Abtriebskörpers 15 ein zweites Dämpfungselement 26 vorgesehen sein. Es ist jedoch ebenso möglich, in der dem Antriebsbereich 12 der Haltebremsvorrichtung 7 zugewandten Fläche 17 des Abtriebskörpers 15 und/oder in einer dem Abtriebsbereich 13 der Haltebremsvorrichtung 7 zugewandten Fläche 18 des Abtriebskörpers 15 zugewandten Fläche des Stellkörpers 14 entsprechende Dämpfungselemente vorzusehen.

Bevorzugt ist ein Federelement 27 so zwischen dem Abtriebskörper 15 und dem Bremskörper 20 angeordnet, dass der Bremskörper 20 mit einer geringen Kraft gegen die Bremsfläche 11 gedrückt wird.

Die Führung 21 in dem Bremskörper 20 ist vorzugsweise als ein Langloch ausgebildet, das in dem Haltezustand der Haltebremsvorrichtung 7 (Figur 3) einen Keilwinkel α mit der Bremsfläche 11 bildet. Durch Ausbilden der Führung 21 als Langloch in dem Keilwinkel α bildet der Bremskörper 20 einen Keil. Das Führungselement 19 ist in der Führung 21 geführt. Durch axiales Bewegen des Abtriebskörpers 15, und somit auch des Führungselements 19, kann der Bremskörper 20 mehr oder weniger stark zwischen dem Führungselement 19 und der Bremsfläche 11 verklemmt werden. Der Keil bzw. der Bremskörper 20 ist um so stärker zwischen dem Führungselement 19 und der Bremsfläche 11 verklemmt, je größer die axiale Abtriebskraft ist, die über das Bremsseil 3 auf den Abtriebskörper 15 wirkt. Das Verklemmen des Bremskörpers erfolgt somit selbstverstärkend oder selbsthemmend. Dadurch kann die aktuelle axiale Position des Abtriebskörpers 15 zuverlässig gehalten werden, wenn die Antriebseinheit 5 keine Kraft auf die Haltebremsvorrichtung 7 überträgt. Die Antriebseinheit 5 kann daher einen hohen Wirkungsgrad aufweisen und braucht nicht selbsthemmend ausgebildet sein. Die Antriebseinheit 5 kann deshalb einfach und preisgünstig ausgebildet sein.

Der Keilwinkel α und ein Reibwert zwischen der Bremsfläche 11 und dem Bremskörper 20 müssen so gewählt sein, dass das selbsthemmende Verklemmen des Bremskörpers 20 zwischen dem Führungselement 19 und der Bremsfläche 11 zuverlässig möglich ist. Eine Kraft, die durch die axiale Abtriebskraft auf den Abtriebskörper 15 und über das Führungselement 19 auf den Bremskörper 20 ausgeübt wird, weist eine Normalkomponente oder Normalkraft senkrecht zu der Bremsfläche 11 und eine Tangentialkomponente in der vorgegebenen Richtung der axialen Abtriebskraft auf. Ein Verhältnis der Tangentialkomponente zu der Normalkomponente der Kraft muss kleiner oder gleich dem Reibwert zwischen der Bremsfläche 11 und dem Bremskörper 20 sein, um das zuverlässige Verklemmen des Bremskörpers 20 zwischen dem Führungselement 19 und der Bremsfläche 11 sicherstellen zu können.

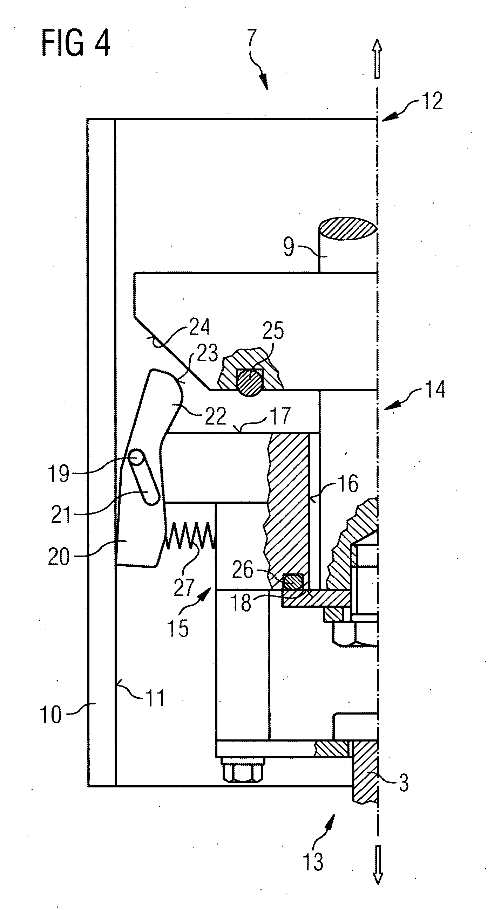

Zum Verstellen oder axialen Positionieren des Abtriebskörpers 15 in dem Gehäuse 10 kann der Stellkörper 14 durch die Antriebseinheit 5 in eine erste Stellposition in Bezug auf den Abtriebskörper 15 bewegt werden (Figur 4). Der Stellkörper 14 ist dann an der dem Abtriebsbereich 13 der Haltebremsvorrichtung 7 zugewandten Fläche 18 des Abtriebskörpers 15 mit dem Abtriebskörper 15 gekoppelt. Das zweite Dämpfungselement 26 dämpft gegebenenfalls einen Aufprall des Stellkörpers 14 auf den Abtriebskörper 15 und kann so einer unerwünschten Geräuschentstehung oder Verschleiß entgegenwirken.

Der Abtriebskörper 15 kann durch den Stellkörper 14 entgegen der vorgegebenen Richtung der axialen Abtriebskraft in Richtung des Antriebsbereichs 12 bewegt werden. Das Führungselement 19 wird dadurch in der Führung 21 relativ zu dem Bremskörper 20 bewegt. Dadurch wird der Bremskörper 20 aus seiner Verklemmung zwischen dem Führungselement 19 und der Bremsfläche 11 gelöst. Das axiale Positionieren des Abtriebskörpers 15 kann somit mit hohem Wirkungsgrad erfolgen, da im Wesentlichen nur die gewünschte axiale Abtriebskraft aufgebracht werden muss. Das Federelement 27 drückt den Bremskörper 20 nur mit einer geringen Kraft gegen die Bremsfläche 11 und verursacht somit nur eine geringe Reibung. Jedoch wird der Bremskörper 20 durch das Federelement 27 in Kontakt mit der Bremsfläche 11 gehalten, so dass ein erneutes Verklemmen des Bremskörpers 20 zuverlässig möglich ist, sobald der Stellkörper 14 von dem Abtriebskörper 15 entkoppelt wird. Die Haltebremsvorrichtung 7 geht dann in ihren Haltezustand über (Figur 3) .

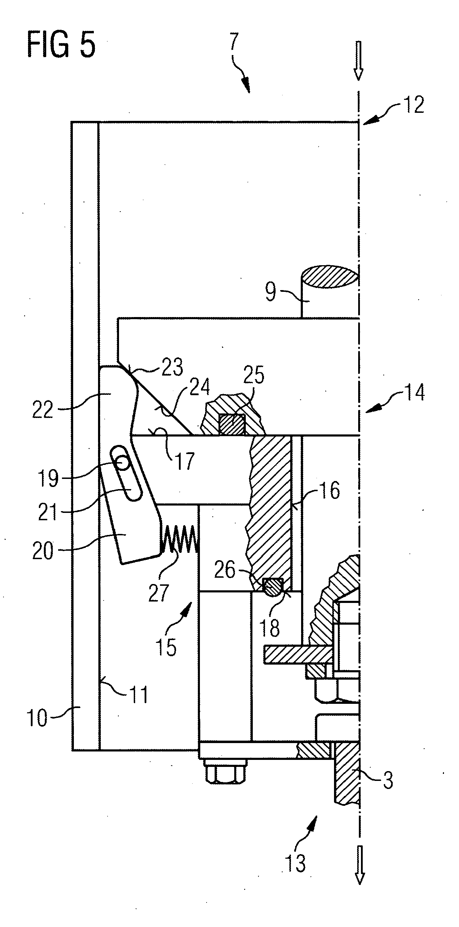

Wird der Stellkörper 14 in eine zweite Stellposition in Bezug auf den Abtriebskörper 15 gebracht, dann koppelt der Stellkörper 14 an seiner Stellfläche 24 mit der Hebelfläche 23 des Bremskörpers 20 (Figur 5). Dadurch kann der Stellkörper 14 eine Kraft so auf den Hebelarm 22 des Bremskörpers 20 ausüben, dass der Bremskörper 20 eine Schwenkbewegung um das Führungselement 19 des Abtriebskörpers 15 ausführt. Durch diese Schwenkbewegung wird das Verklemmen des Bremskörpers 20 zwischen dem Führungselement 19 und der Bremsfläche 11 aufgehoben. Ferner kann der Stellkörper 14 an der dem Antriebsbereich 12 der Haltebremsvorrichtung 7 zugewandten Fläche 17 des Abtriebskörpers 15 mit dem Abtriebskörper 15 koppeln. Der Abtriebskörper 15 kann somit sehr einfach und mit hohem Wirkungsgrad in die vorgegebene Richtung der axialen Abtriebskraft bewegt werden. Das erste Dämpfungselement 25 dämpft gegebenenfalls den Aufprall des Stellkörpers 14 auf den Abtriebskörper 15 und kann so der unerwünschten Geräuschentstehung oder Verschleiß entgegenwirken.

Falls der Bremskörper 20 so geschwenkt wird, dass der Bremskörper 20 in einem Bereich des Hebelarms 22 die Bremsfläche 11 berührt, dann kann es vorteilhaft sein, den Hebelarm 22 in diesem Bereich so auszubilden, dass der Reibwert zwischen dem Hebelarm 22 und der Bremsfläche 11 gering ist. Insbesondere kann der Hebelarm 22 so ausgebildet sein, dass der Reibwert zwischen dem Hebelarm 22 und der Bremsfläche 11 geringer ist als zwischen dem Bremskörper 20 und der Bremsfläche 11 in dem Haltezustand der Haltebremsvorrichtung 7. Es ist jedoch ebenso möglich, die Haltebremsvorrichtung 7 so auszubilden, dass der Hebelarm 22 die Bremsfläche 11 nicht berührt.

Durch das Wegbewegen des Stellkörpers 14 von dem Bremskörper 20 wird der Bremskörper 20 durch das Federelement 27 so zurückgeschwenkt, dass der Bremskörper 20 wieder zuverlässig zwischen dem Führungselement 19 und der Bremsfläche 11 verklemmbar ist. Der Haltezustand der Haltebremsvorrichtung 7 kann somit schnell und zuverlässig eingenommen werden (Figur 3).

Alternativ oder zusätzlich zu der Antriebseinheit 5 mit dem elektromotorischen Stellantrieb 6 kann die Haltebremsvorrichtung 7 z.B. auch manuell oder per Fuß betätigbar sein.

Die Haltebremsvorrichtung 7 ist so ausgebildet, dass die aktuelle axiale Position des Abtriebskörpers 15 und die axiale Abtriebskraft mit rein mechanischen Mitteln gehalten werden können. Die Antriebseinheit 5 mit dem elektromotorischen Stellantrieb 6 ist lediglich für das Verstellen oder axiale Positionieren des Abtriebskörpers 15 erforderlich. Jedoch kann es erforderlich sein, das Verklemmen des Bremskörpers 20 auch dann aufzuheben, wenn der elektromotorische Stellantrieb 6 nicht genutzt werden kann, z.B. aufgrund eines elektrischen Defekts oder einer leeren Batterie. In der Aktorvorrichtung 4 oder der Haltebremsvorrichtung 7 kann daher ein mechanisches Betätigungselement vorgesehen sein, das das Aufheben der Verklemmung des Bremskörpers herbeiführen kann und das vorzugsweise manuell betätigbar ist.

Beispielsweise kann der Stellkörper 14 durch ein Gestänge oder einen Hebel oder auch durch das Übertragungselement 9 manuell betätigt werden. Ebenso kann ein weiteres Übertragungselement vorgesehen sein, z.B. ein Gestänge oder ein Seil, das so mit dem Bremskörper 20 gekoppelt ist, dass der Bremskörper 20 die Schwenkbewegung um das Führungselement 19 ausführt, wenn an dem Seil gezogen wird oder das Gestänge entsprechend bewegt wird zum Ausführen der Schwenkbewegung des Bremskörpers 20. Ferner kann beispielsweise der elektromotorische Stellantrieb 6 oder die Spindel 8 ein Zahnrad aufweisen, in das eine Zahnstange eingreift, die manuell durch Drücken oder Ziehen betätigbar ist. Dadurch kann der elektromotorische Stellantrieb 6 oder die Spindel 8 manuell rotatorisch bewegt werden. Der elektromotorische Stellantrieb 6 oder die Spindel 8 können jedoch auch z.B. mittels einer starren oder einer flexiblen Welle und einer daran gekoppelten Handkurbel rotatorisch bewegt werden.

In der Antriebseinheit 5 kann auch eine Energiequelle, z.B. eine Batterie, zum Betreiben des elektromotorischen Stellantriebs 6 vorgesehen sein oder die Antriebseinheit 5 kann mit der Energiequelle gekoppelt sein, die zusätzlich zu und unabhängig von einer elektrischen Versorgung der Antriebseinheit 5 in dem Fahrzeug 1 den Betrieb der Antriebseinheit 5, und somit auch der Haltebremsvorrichtung 7, sicherstellen kann, wenn die elektrische Versorgung in dem Fahrzeug 1 nicht genügend elektrische Energie bereitstellen kann. Es kann jedoch auch ein Stellantrieb vorgesehen sein, der z.B. mit dem weiteren Übertragungselement gekoppelt ist und der durch die Energiequelle betrieben werden kann zum Betätigen des weiteren Übertragungselements.

## Patentansprüche

1. Haltebremsvorrichtung, die einen Bremskörper (20), einen Abtriebskörper (15) und eine Bremsfläche (11) umfasst und bei der
- der Abtriebskörper (15) axial bewegbar angeordnet und mit einer Abtriebseinheit koppelbar ist, durch die eine axiale Abtriebskraft in einer vorgegebenen Richtung auf den Abtriebskörper (15) ausübbar ist und der Abtriebskörper (15) ein Führungselement (19) aufweist,
- der Bremskörper (20) eine Führung (21) aufweist, in der das Führungselement (19) des Abtriebskörpers (15) geführt ist, und
- der Bremskörper (20) und die Führung (21) so ausgebildet sind, dass der Bremskörper abhängig von einer aktuellen Position des Bremskörpers (20) in Bezug auf das Führungselement (19) des Abtriebskörpers (15) zwischen dem Führungselement (19) und der Bremsfläche (11) verklemmt ist oder die Verklemmung des Bremskörpers (20) zwischen dem Führungselement (19) und der Bremsfläche (11) aufgehoben ist.

2. Haltebremsvorrichtung nach Anspruch 1, bei der die Führung (21) des Bremskörpers (20) so ausgebildet ist, dass der Bremskörper (20) einen Keil bildet, der in dem Haltezustand der Haltebremsvorrichtung (7) selbsthemmend zwischen dem Führungselement (19) des Abtriebskörpers (15) und der Bremsfläche (11) verklemmt ist.

3. Haltebremsvorrichtung nach einem der vorstehenden Ansprüche, bei der die Führung (21) des Bremskörpers (20) als ein Langloch in dem Bremskörper (20) ausgebildet ist.

4. Haltebremsvorrichtung nach Anspruch 3, bei der das Führungselement (19) des Abtriebskörpers (15) stiftförmig ausgebildet ist und in das Langloch in dem Bremskörper (20) eingebracht ist.

5. Haltebremsvorrichtung nach einem der vorstehenden Ansprüche, die einen Stellkörper (14) umfasst und
- der Stellkörper (14) axial bewegbar angeordnet und mit einer Antriebseinheit (5) koppelbar ist und der Stellkörper (14) abhängig von einer Ansteuerung der Antriebseinheit (5) axial bewegbar ist und
- der Stellkörper (14) und der Abtriebskörper (15) in einer ersten und in einer zweiten Stellposition des Stellkörpers (14) in Bezug auf den Abtriebskörper (15) miteinander koppelbar sind abhängig von einer axialen Position des Stellkörpers (14) in Bezug auf den Abtriebskörper (15) zum Aufheben der Verklemmung des Bremskörpers (20) zwischen dem Führungselement (19) und der Bremsfläche (11).

6. Haltebremsvorrichtung nach Anspruch 5, bei der das Verklemmen des Bremskörpers (20) aufgehoben ist, wenn der Stellkörper (14) durch axiales Positionieren in der ersten Stellposition in Bezug auf den Abtriebskörper (15) angeordnet ist zum Bewegen des Abtriebskörpers (15) mittels des Stellkörpers (14) entgegen der vorgegebenen Richtung der axialen Abtriebskraft.

7. Haltebremsvorrichtung nach einem der Ansprüche 5 oder 6, bei der das Verklemmen des Bremskörpers (20) aufgehoben ist durch axiales Positionieren des Stellkörpers (14) in der zweiten Stellposition in Bezug auf den Abtriebskörper (15), so dass eine Normalkraft, die der Bremskörper (20) während des Verklemmens auf die Bremsfläche (11) ausübt, durch eine Schwenkbewegung des Bremskörpers (20) um das Führungselement (19) des Abtriebskörpers (15) so verringert ist, dass das Abtriebselement (15) axial verschiebbar ist.

8. Haltebremsvorrichtung nach Anspruch 7, bei der der Bremskörper (20) als ein Hebel ausgebildet ist, der mittels des Stellkörpers (14) betätigbar ist zum Ausführen der Schwenkbewegung des Bremskörpers (20) um das Führungselement (19) des Abtriebskörpers (15).

9. Haltebremsvorrichtung nach einem der vorstehenden Ansprüche, bei der der Bremskörper (20) durch ein Federelement (27) mit dem Abtriebskörper (15) gekoppelt ist, das den Bremskörper (20) gegen die Bremsfläche (11) drückt.

10. Haltebremsvorrichtung nach einem der vorstehenden Ansprüche, bei der in dem Abtriebskörper (15) eine axiale Ausnehmung (16) ausgebildet ist und der Stellkörper (14) sich durch die axiale Ausnehmung (16) erstreckt und der Stellkörper (14) in der ersten Stellposition in Bezug auf den Abtriebskörper (15) so mit dem Abtriebskörper (15) gekoppelt ist, dass dieser entgegen der vorgegebenen Richtung verschiebbar ist, und in der zweiten Stellposition in Bezug auf den Abtriebskörper (15) so mit dem Abtriebskörper (15) gekoppelt ist, dass dieser in der vorgegebenen Richtung verschiebbar ist.

11. Haltebremsvorrichtung nach einem der vorstehenden Ansprüche, bei der der Bremskörper (20) mit einem weiteren Übertragungselement koppelbar ist zum Herbeiführen der Schwenkbewegung des Bremskörpers (20) um das Führungselement (19) des Abtriebskörpers (15) unabhängig von der axialen Position des Stellkörpers (14) in Bezug auf den Abtriebskörper (15), so dass die Normalkraft, die der Bremskörper (20) während des Verklemmens auf die Bremsfläche (11) ausübt, verringert ist und das Abtriebselement (15) axial verschiebbar ist.

## Claims

1. Holding brake device which comprises a brake body (20), a drive output body (15) and a brake surface (11) and in which
- the drive output body (15) is arranged so as to be axially moveable and can be coupled with a drive output unit, by means of which an axial drive output force can be exerted on the drive output body (15) in a predefined direction, and the drive output body (15) has a guide element (19),
- the brake body (20) has a guide (21) in which the guide element (19) of the drive output body (15) is guided, and
- the brake body (20) and the guide (21) are implemented such that the brake body is clamped between the guide element (19) and the brake surface (11), or the clamping of the brake body (20) between the guide element (19) and the brake surface (11) is released, depending on a current position of the brake body (20) in relation to the guide element (19) of the drive output body (15).

2. Holding brake device according to claim 1, in which the guide (21) of the brake body (20) is implemented such that the brake body (20) forms a wedge which, in the holding state of the holding brake device (7), is clamped in a self-locking manner between the guide element (19) of the drive output body (15) and the brake surface (11).

3. Holding brake device according to one of the preceding claims, in which the guide (21) of the brake body (20) is implemented as an elongated hole in the brake body (20).

4. Holding brake device according to claim 3, in which the guide element (19) of the drive output body (15) is implemented in the form of a pin and is inserted into the elongated hole in the brake body (20).

5. Holding brake device according to one of the preceding claims, which comprises an actuating body (14) and
- the actuating body (14) is arranged so as to be axially moveable and can be coupled with a drive unit (5) and the actuating body (14) can be moved axially depending on the control exercised by the drive unit (5) and
- the actuating body (14) and the drive output body (15) can be coupled with one another in a first and in a second actuating position of the actuating body (14) with respect to the drive output body (15) depending on an axial position of the actuating body (14) with respect to the drive output body (15) in order to release the clamping of the brake body (20) between the guide element (19) and the brake surface (11).

6. Holding brake device according to claim 5, in which the clamping of the brake body (20) is released if the actuating body (14) is arranged through axial positioning in the first actuating position with respect to the drive output body (15) in order to move the drive output body (15) against the predefined direction of the axial drive output force by means of the actuating body (14).

7. Holding brake device according to one of claims 5 or 6, in which the clamping of the brake body (20) is released through axial positioning of the actuating body (14) in the second actuating position with respect to the drive output body (15), such that a normal force which the brake body (20) exerts on the brake surface (11) during clamping is reduced by a rotating motion of the brake body (20) around the guide element (19) of the drive output body (15) in such a manner that the drive output element (15) can be displaced axially.

8. Holding brake device according to claim 7, in which the brake body (20) is implemented as a lever which can be operated by means of the actuating body (14) in order to execute the rotating motion of the brake body (20) around the guide element (19) of the drive output body (15).

9. Holding brake device according to one of the preceding claims, in which the brake body (20) is coupled through a spring element (27) with the drive output body (15), which presses the brake body (20) against the brake surface (11).

10. Holding brake device according to one of the preceding claims, in which an axial opening (16) is implemented in the drive output body (15) and the actuating body (14) extends through the axial opening (16) and in the first actuating position with respect to the drive output body (15) the actuating body (14) is coupled in such a way with the drive output body (15) that the latter can be moved against the predefined direction, and in the second actuating position with respect to the drive output body (15) it is coupled in such a way with the drive output body (15) that the latter can be moved in the predefined direction.

11. Holding brake device according to one of the preceding claims, in which the brake body (20) can be coupled with a further transmission element in order to effect the rotating motion of the brake body (20) around the guide element (19) of the drive output body (15) independently of the axial position of the actuating body (14) with respect to the drive output body (15), such that the normal force which the brake body (20) exerts on the brake surface (11) during clamping is reduced and the drive output element (15) can be displaced axially.

## Revendications

1. Dispositif de freinage d'arrêt qui comprend un corps de frein (20), un corps de sortie (15) et une surface de frein (11), et dans lequel
- le corps de sortie (15) est disposé mobile dans la direction axiale et peut être accouplé à une unité de sortie par laquelle une force de sortie axiale peut être exercée sur le corps de sortie (15) dans une direction prédéterminée, et le corps de sortie (15) présente un élément de guidage (19),
- le corps de frein (20) présente un guidage (21) dans lequel l'élément de guidage (19) du corps de sortie (15) est guidé, et
- le corps de frein (20) et le guidage (21) sont conformés de telle sorte que selon une position actuelle du corps de frein (20) par rapport à l'élément de guidage (19) du corps de sortie (15), soit le corps de frein est serré entre l'élément de guidage (19) et la surface de frein (11), soit le serrage du corps de frein (20) entre l'élément de guidage (19) et la surface de frein (11) est relâché.

2. Dispositif de frein d'arrêt selon la revendication 1, dans lequel le guidage (21) du corps de frein (20) est conformé de telle sorte que le corps de frein (20) forme un coin qui, dans l'état d'arrêt du dispositif de frein d'arrêt (7), est serré avec autoserrage entre l'élément de guidage (19) du corps de sortie (15) et la surface de frein (11).

3. Dispositif de frein d'arrêt selon une des revendications précédentes, dans lequel le guidage (21) du corps de frein (20) est constitué par un trou allongé ménagé dans le corps de frein (20).

4. Dispositif de frein d'arrêt selon la revendication 3, dans lequel l'élément de guidage (19) du corps de sortie (15) est en forme de tige et est engagé dans le trou allongé ménagé dans le corps de frein (20).

5. Dispositif de frein d'arrêt selon une des revendications précédentes, qui comprend un corps de réglage (14) et
- le corps de réglage (14) est disposé mobile dans la direction axiale et peut être accouplé à une unité d'entrée (5), et le corps de réglage (14) peut être déplacé axialement en fonction d'une commande de l'unité d'entrée (5) et
- le corps de réglage (14) et le corps de sortie (15) peuvent être accouplés l'un à l'autre dans une première et une seconde position de réglage du corps de réglage (14) par rapport au corps de sortie (15), en fonction d'une position axiale du corps de réglage (14) par rapport au corps de sortie (15) pour relâcher le serrage du corps de frein (20) entre l'élément de guidage (19) et la surface de frein (11).

6. Dispositif de frein d'arrêt selon la revendication 5, dans lequel le serrage du corps de frein (20) est relâché lorsque le corps de réglage (14) est disposé, par positionnement axial, dans la première position de réglage par rapport au corps de sortie (15), pour permettre le déplacement du corps de sortie (15) au moyen du corps de réglage (14) dans la direction inverse de la direction prédéterminée de la force de sortie axiale.

7. Dispositif de frein d'arrêt selon une des revendications 5 ou 6, dans lequel le serrage du corps de frein (20) est relâché par un positionnement axial du corps de réglage (14) dans la deuxième position de réglage par rapport au corps de sortie (15), de telle sorte qu'une force normale que le corps de frein (20) exerce sur la surface de frein (11) pendant le serrage est suffisamment réduite par un mouvement de pivotement du corps de frein (20) autour de l'élément de guidage (19) du corps de sortie (15) pour que l'élément de sortie (15) puisse être déplacé axialement.

8. Dispositif de frein d'arrêt selon la revendication 7, dans lequel le corps de frein (20) est constitué par un levier qui peut être actionné au moyen du corps de réglage (14) pour l'exécution du mouvement de pivotement du corps de frein (20) autour de l'élément de guidage (19) du corps de sortie (15).

9. Dispositif de frein d'arrêt selon une des revendications précédentes, dans lequel le corps de frein (20) est accouplé au corps de sortie (15) par un élément élastique (24) qui presse le corps de frein (20) contre la surface de frein (11).

10. Dispositif de frein d'arrêt selon une des revendications précédentes, dans lequel un évidement axial (16) est formé dans le corps de sortie (15) et le corps de réglage (14) s'étend à travers l'évidement axial (16) et, dans la première position de réglage par rapport au corps de sortie (15), le corps de réglage (14) est accouplé au corps de sortie (15) de sorte que ce dernier peut être déplacé dans la direction inverse de la direction prédéterminée, tandis que, dans la seconde position de réglage par rapport au corps de sortie (15), il est accouplé au corps de sortie (15) de sorte que ce dernier peut être déplacé dans la direction prédéterminée.

11. Dispositif de frein d'arrêt selon une des revendications précédentes, dans lequel le corps de frein (20) peut être accouplé à un autre élément de transmission pour provoquer le mouvement de pivotement du corps de frein (20) autour de l'élément de guidage (19) du corps de sortie (5 15) indépendamment de la position axiale du corps de réglage (14) par rapport au corps de sortie (15), de sorte que la force normale que le corps de frein (20) exerce sur la surface de frein (11) pendant le serrage est réduite et que l'élément de sortie (15) peut être déplacé axialement.
